# EUROPEAN PATENT APPLICATION

(11) **EP 4 556 099 A1**
(43) Date of publication of application: **21.05.2025**
(21) Application number: 22951171.2
(22) Date of filing: 15.07.2022
(51) Int. Cl.: B01D 53/06, F24F 1/06, F24F 3/12

(54) **CARBON-DIOXIDE COLLECTION SYSTEM**

(71) Applicant: MITSUBISHI ELECTRIC CORPORATION, Chiyoda-ku Tokyo 100-8310 (JP)
(72) Inventor: TANISHIMA Makoto, Tokyo 100-8310 (JP); INOUE Takumi, Tokyo 100-8310 (JP); FUKUI Tomoya, Tokyo 100-8310 (JP); FUJINO Jun, Tokyo 100-8310 (JP); ONAKA Yoji, Tokyo 100-8310 (JP); SHINOKI Toshio, Tokyo 100-8310 (JP); KAWAMOTO Makoto, Tokyo 100-8310 (JP)
(74) Representative: Meissner Bolte Partnerschaft mbB
(86) International application number: PCT/JP2022/027795
(87) International publication number: WO 2024/013958

(57) **Abstract**

A carbon dioxide recovery system of the present invention includes a plurality of outdoor units of an air conditioning system; an adsorbent that is configured to adsorb carbon dioxide; a plurality of first containers that are disposed at positions in which at least part of an air flow generated by the plurality of outdoor units reaches, that are configured to accommodate the adsorbent therein, and that have air permeability; a separation device that is connected to the plurality of first containers and that is configured to separate carbon dioxide from the adsorbent which has adsorbed the carbon dioxide; and a recovery device that is configured to recover the carbon dioxide separated by the separation device, in which the number of the plurality of first containers is greater than the number of separation devices.

## Description

### Technical Field

The present invention relates to a carbon dioxide recovery system.

### Background Art

Patent Document 1 discloses a device that removes carbon dioxide in air using an adsorbent capable of adsorbing carbon dioxide.

### Citation List

### Patent Documents

Patent Document 1: Japanese Unexamined Patent Application, First Publication JP 2020- 131 166 A.

### Summary of the Invention

### Problem to be Solved by the Invention

It is required to improve a recovery efficiency of carbon dioxide by an adsorbent.

In view of the above circumstances, the present invention is to provide a carbon dioxide recovery system capable of improving a recovery efficiency of carbon dioxide.

### Means to Solve the Problem

One aspect of the carbon dioxide recovery system according to the present invention includes a plurality of outdoor units of an air conditioning system; an adsorbent that are configured to adsorb carbon dioxide; a plurality of first containers that are disposed at positions in which at least part of an air flow generated by the plurality of outdoor units reaches, that are configured to accommodate the adsorbent therein, and that have air permeability; a separation device that is connected to the plurality of first containers and that is configured to separate carbon dioxide from the adsorbent which has adsorbed the carbon dioxide; and a recovery device that is configured to recover the carbon dioxide separated by the separation device, in which the number of the plurality of first containers is greater than the number of separation devices.

Another aspect of the carbon dioxide recovery system according to the present invention includes a plurality of outdoor units of an air conditioning system; an adsorbent that is configured to adsorb carbon dioxide; a container that is disposed above the plurality of outdoor units, that is configured to accommodate the adsorbent therein, and that has air permeability; a separation device that is connected to the container and that is configured to separate carbon dioxide from the adsorbent which has adsorbed the carbon dioxide; and a recovery device that is configured to recover the carbon dioxide separated by the separation device, in which the separation device is disposed above the recovery device.

### Effects of the Invention

According to the present invention, it is possible to provide a carbon dioxide recovery system capable of improving a recovery efficiency of carbon dioxide.

### Brief Description of the Drawings

FIG. 1 A block diagram of a carbon dioxide recovery system according to Embodiment 1.
FIG. 2 A plan view schematically showing the carbon dioxide recovery system according to Embodiment 1.
FIG. 3 A cross-sectional view taken along line A-A of FIG. 2.
FIG. 4 A block diagram of a carbon dioxide recovery system according to Embodiment 2.
FIG. 5 A plan view schematically showing the carbon dioxide recovery system according to Embodiment 2.
FIG. 6 A cross-sectional view schematically showing the carbon dioxide recovery system according to Embodiment 2.
FIG. 7 A block diagram of a carbon dioxide recovery system according to Embodiment 3.
FIG. 8 A cross-sectional view schematically showing the carbon dioxide recovery system according to Embodiment 3.
FIG. 9 A block diagram of a carbon dioxide recovery system according to Embodiment 4.
FIG. 10 A plan view schematically showing the carbon dioxide recovery system according to Embodiment 4.
FIG. 11 A cross-sectional view schematically showing the carbon dioxide recovery system according to Embodiment 4.
FIG. 12 A cross-sectional view schematically showing a carbon dioxide recovery system according to Embodiment 5.
FIG. 13 A cross-sectional view schematically showing a carbon dioxide recovery system according to Embodiment 6.
FIG. 14 A plan view schematically showing a carbon dioxide recovery system according to Embodiment 7.
FIG. 15 A side view schematically showing the carbon dioxide recovery system according to Embodiment 7.
FIG. 16 A side view schematically showing a carbon dioxide recovery system according to a modification example of Embodiment 7.

### Description of Embodiments

Hereinafter, some embodiments of the present invention will be described with reference to the drawings. The scope of the present invention is not limited to the following embodiments, and can be changed in any way within the scope of technical ideas of the present invention.

### Embodiment 1

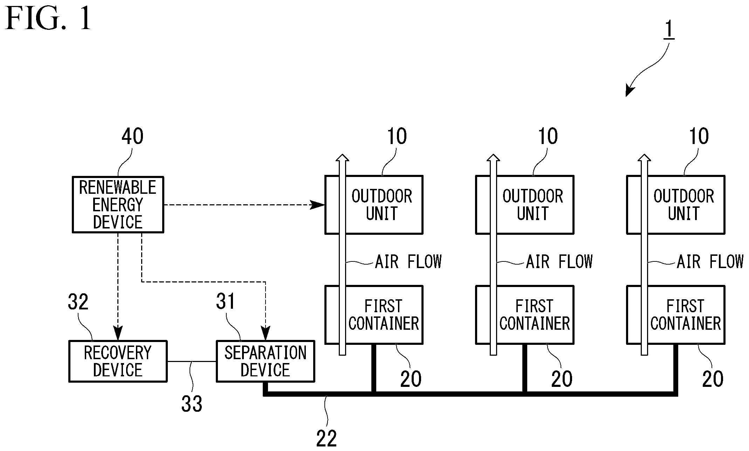

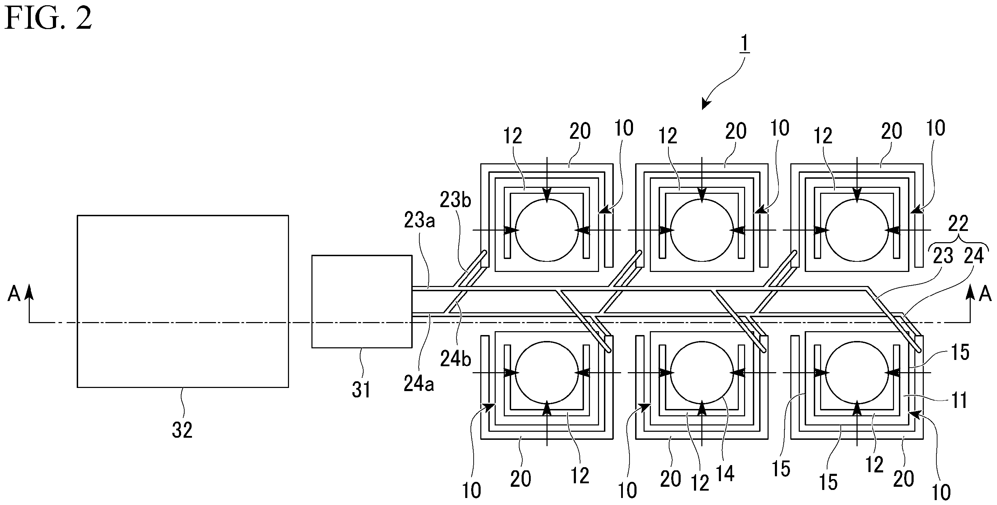

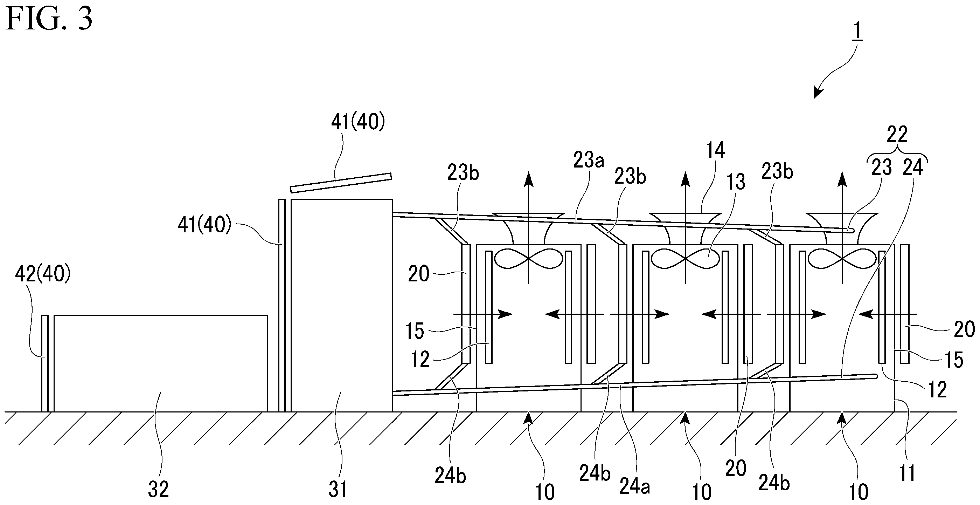

FIG. 1 is a block diagram of a carbon dioxide recovery system 1 according to Embodiment 1. FIG. 2 is a plan view schematically showing the carbon dioxide recovery system 1. FIG. 3 is a cross-sectional view taken along line A-A of FIG. 2.

The carbon dioxide recovery system 1 recovers carbon dioxide from air. The carbon dioxide recovery system 1 is installed, for example, on the roof of a building (such as an office building or an apartment). The carbon dioxide recovery system 1 may also be installed in an open space next to an office building, in the courtyard of an apartment, in a desert, or in similar locations.

The carbon dioxide recovery system 1 includes a plurality of outdoor units 10 of an air conditioning system, an adsorbent, a plurality of first containers 20, a first adsorbent pipe 22, a separation device 31, a recovery device 32, and a renewable energy device 40.

The air conditioning system regulates air inside the building (indoors). In the present embodiment, the air conditioning system is, for example, a multi-air conditioner for the office building. The air conditioning system includes a plurality of outdoor units 10 installed outdoors and a plurality of indoor units (not shown) installed indoors. In the air conditioning system, the refrigerant circulates between the outdoor unit 10 and the indoor units.

As shown in FIGS. 2 and 3, the outdoor unit 10 includes a casing 11, a heat exchanger 12, and a blower 13 (see FIG. 3).

The casing 11 has a rectangular parallelepiped shape with four side surfaces, a top surface, and a bottom surface. A blowing port 14 is formed on the top surface of the casing 11. Among the four side surfaces of the casing 11, three side surfaces are formed with intake ports 15.

The heat exchanger 12 is disposed inside the casing 11. The heat exchanger 12 performs heat exchange between the refrigerant and the outside air (air). In a plan view, the heat exchanger 12 has a substantially U shape. The heat exchanger 12 is disposed along the three side surfaces of the casing 11 in which the intake ports 15 are formed.

The blower 13 is disposed inside the casing 11. The blower 13 directs air from the inside of the outdoor unit 10 to the outside. When the blower 13 is driven, air is sucked into the casing 11 from the intake port 15. The air sucked into the casing 11 passes through the heat exchanger 12 and is blown out from the blowing port 14 to the outside of the casing 11. The air is blown upward from the blowing port 14.

In the present embodiment, the plurality of outdoor units 10 are arranged in two rows (a first row and a second row). The first row and the second row are parallel to each other. The outdoor units 10 in the first row and the outdoor units 10 in the second row are disposed such that the side surfaces of the casings 11, in which the heat exchangers 12 are not disposed (that is, the side surfaces without the intake ports 15), face each other.

The disposition of the plurality of outdoor units 10 is not limited to this. The plurality of outdoor units 10 may be arranged in a single row. The plurality of outdoor units 10 may be arranged in two or more rows.

In addition, among the four side surfaces of the casing 11, the intake port 15 may be formed on the entire surface of three side surfaces and on half of the remaining one side surface. In this case, among the four side surfaces of the casing 11, the heat exchanger 12 is disposed along the entire surface of three side surfaces and along half of the remaining one side surface. Among the four side surfaces of the casing 11, the outdoor unit 10 in the first row and the outdoor unit 10 in the second row are disposed such that the side surfaces with the smallest area in which the heat exchanger 12 is disposed (that is, the side surfaces with the smallest area in which the intake port 15 is formed), face each other.

The adsorbent includes a material capable of adsorbing carbon dioxide. Examples of a material capable of adsorbing carbon dioxide include amine, zeolite, silica gel, diatomaceous earth, alumina, activated carbon, and the like. A plurality of materials may be selected and adopted from the above, or a material other than the above may be adopted. The adsorbent may have a granular shape (for example, bead shape (spherical) or pellet shape (cylindrical)). Alternatively, a powdery adsorbent may be adopted. In this case, the powdery adsorbent may be carried on a surface of a base material. The base material may have, for example, a honeycomb shape.

The first container 20 is a container capable of accommodating the adsorbent therein. The first container 20 is attached to the outdoor unit 10. In the present embodiment, one first container 20 is provided for each outdoor unit 10. The first container 20 is disposed at a position in which the air flow generated by the blower 13 (air flow generated by the outdoor unit 10) reaches.

One first container 20 may be provided for the plurality of outdoor units 10. In this case, the first container 20 is disposed at a position in which the air flow generated by the plurality of outdoor units 10 reaches.

In a plan view, the first container 20 has a substantially U-shape. The first container 20 is disposed along the heat exchanger 12. In other words, the first container 20 is disposed along three side surfaces of the casing 11, in which the heat exchanger 12 is disposed (that is, three side surfaces in which the intake port 15 is formed). The first container 20 is disposed on an upstream side of the heat exchanger 12 in a flow direction of the air flow generated by the outdoor unit 10. In the first container 20, the air flow of the air sucked from the intake port 15 into the casing 11 by the driving of the blower 13 reaches.

The first container 20 has air permeability. Therefore, when the blower 13 operates, air enters the adsorbent accommodated in the first container 20, or the air inside the adsorbent accommodated in the first container 20 is discharged. That is, the air inside the first container 20 can be replaced with the outside air by the operation of the blower 13.

The first adsorbent pipe 22 connects the plurality of first containers 20 to the separation device 31. The first adsorbent pipe 22 transports the adsorbent between the plurality of first containers 20 and the separation device 31. For example, a material of the first adsorbent pipe 22 is polyvinyl chloride, a metal such as aluminum or stainless steel, or the like. The cross-sectional shape of the first adsorbent pipe 22 may be circular or rectangular.

The first adsorbent pipe 22 includes a first pipe 23 that transports the adsorbent from the separation device 31 to the plurality of first containers 20, and a second pipe 24 that transports the adsorbent from the plurality of first containers 20 to the separation device 31.

The first pipe 23 includes a main pipe portion 23a and a plurality of branch pipe portions 23b that branch off from the main pipe portion 23a. The main pipe portion 23a is disposed between the outdoor unit 10 in the first row and the outdoor unit 10 in the second row. One end of the branch pipe portion 23b is connected to the main pipe portion 23a. The other end of the branch pipe portion 23b is connected to the upper part of the first container 20. The adsorbent is transported from the separation device 31 to the upper part of the first container 20 via the main pipe portion 23a and the branch pipe portion 23b, and then into the first container 20. In the first container 20, the adsorbent is transported from the upper side to the lower side.

The second pipe 24 includes a main pipe portion 24a and a plurality of branch pipe portions 24b that branch off from the main pipe portion 24a. The main pipe portion 24a is disposed between the outdoor unit 10 in the first row and the outdoor unit 10 in the second row. One end of the branch pipe portion 24b is connected to the main pipe portion 24a. The other end of the branch pipe portion 24b is connected to the lower part of the first container 20. The adsorbent is discharged from the lower part of the first container 20 and is transported to the separation device 31 via the main pipe portion 24a and the branch pipe portion 24b.

As shown in FIG. 3, the first pipe 23 is disposed above the second pipe 24. Each of the first pipe 23 and the second pipe 24 is inclined to extend downward as it moves toward a downstream side in a transport direction of the adsorbent. That is, the first pipe 23 is inclined to extend downward as the first pipe 23 is separated from the separation device 31, and the second pipe 24 is inclined to extend downward as the second pipe 24 approaches the separation device 31. The adsorbent moves through the first pipe 23 and the second pipe 24 by its own weight. For example, the adsorbent moves by rolling along the first pipe 23 and the second pipe 24. Depending on the size of the adsorbent or the like, a roller conveyor, belt conveyor, blower, or the like for assisting the movement of the adsorbent may be provided in the first pipe 23 and the second pipe 24.

The separation device 31 has a function of separating carbon dioxide from the adsorbent that has adsorbed carbon dioxide. The separation device 31 transports the adsorbent which has adsorbed carbon dioxide in the plurality of first containers 20 through the first adsorbent pipe 22 (the second pipe 24). The adsorbent from which the carbon dioxide has been separated by the separation device 31 is transported to the plurality of first containers 20 through the first adsorbent pipe 22 (first pipe 23).

The separation device 31 may include a heater, and may separate carbon dioxide by heating (for example, 60 °C to 120 °C) the adsorbent. The heating temperature may be appropriately changed depending on the specific material of the adsorbent. Alternatively, the separation device 31 may separate carbon dioxide by including a vacuum pump and placing the adsorbent under a reduced pressure condition.

The recovery device 32 is connected to the separation device 31 through a recovery pipe 33. The carbon dioxide separated by the separation device 31 is transported to the recovery device 32 through the recovery pipe 33. The recovery device 32 recovers the carbon dioxide separated by the separation device 31.

The recovery device 32 has, for example, a methanation system having a function of generating methane using carbon dioxide, hydrogen, water, electric power, and the like. The recovery device 32 may include a gas cylinder capable of storing carbon dioxide.

The renewable energy device 40 includes solar panels 41 and 42. For example, the solar panels 41 and 42 are lightweight and flexible film-type solar panels. As shown by the dotted arrow in FIG. 1, power generated by the renewable energy device 40 is supplied to at least one of the plurality of outdoor units 10, the separation device 31, and/or the recovery device 32.

The solar panel 41 is attached to a wall surface of the separation device 31. The solar panel 42 is attached to a wall surface of the recovery device 32. As a result, it is not necessary to newly provide space for installing the solar panels 41 and 42, thereby improving space efficiency. To increase the installation area of the solar panels 41 and 42, the solar panels 41 and 42 may be attached to the wall surface of the separation device 31 or the recovery device 32 that has a larger area. In addition, to improve the power generation of the solar panels 41 and 42, the separation device 31 or the recovery device 32 may be disposed such that the wall surface to which the solar panels 41 and 42 are attached faces south.

The number of each component installed in the carbon dioxide recovery system 1 will be described.

The number of first containers 20 is greater than the number of separation devices 31. Additionally, when the number of methanation systems in the recovery device 32 is denoted by N1, the number of separation devices 31 is denoted by N2, and the number of outdoor units 10 is denoted by N3, the relationship N1 ≤ N2 < N3 is satisfied.

For example, in the present embodiment, the number of first containers 20 is 6, the number N1 of methanation systems is 1, the number N2 of separation devices 31 is 1, and the number N3 of outdoor units 10 is 6. Note that the number of outdoor units 10, the number of first containers 20, the number of separation devices 31, and the number of methanation systems are not limited to this. The number of first containers 20 may be larger than the number of separation devices 31, and may satisfy the relationship N1 ≤ N2 < N3. In addition, when one first container 20 is provided for the plurality of outdoor units 10, the number of outdoor units 10 is greater than the number of first containers 20.

A method of recovering carbon dioxide using the carbon dioxide recovery system 1 will be described.

The carbon dioxide recovery system 1 recovers carbon dioxide by utilizing the air flow generated by the blower 13 and the external air blown into the first container 20.

That is, when the blower 13 is driven, the air flow of the air sucked from the intake port 15 into the casing 11 reaches the first container 20. In addition, the external air is blown into the first container 20. The air flow generated by the blower 13 and the external air are brought into contact with the adsorbent accommodated in the first container 20, causing the adsorbent to adsorb carbon dioxide (adsorbing step). After that, the adsorbent which has adsorbed the carbon dioxide is transported from the first container 20 to the separation device 31. The separation device 31 separates carbon dioxide from the adsorbent which has adsorbed carbon dioxide (separation step). The recovery device 32 recovers the carbon dioxide separated by the separation device 31 (recovering step).

As described above, the carbon dioxide recovery system 1 according to the present embodiment includes a plurality of outdoor units 10 of an air conditioning system; an adsorbent that is configured to adsorb carbon dioxide; a plurality of first containers 20 that are disposed at positions in which at least part of an air flow generated by the plurality of outdoor units 10 reaches, that are configured to accommodate the adsorbent therein, and that have air permeability; a separation device 31 that is connected to the plurality of first containers 20 and that is configured to separate carbon dioxide from the adsorbent which has adsorbed the carbon dioxide; and a recovery device 32 that is configured to recover the carbon dioxide separated by the separation device 31. The number of the plurality of first containers 20 is greater than the number of the separation devices 31.

As a result, carbon dioxide can be recovered by utilizing the air flow generated by the plurality of outdoor units 10. Therefore, carbon dioxide can be recovered with energy savings (less energy), improving the efficiency of recovering carbon dioxide.

In this case, it is necessary to recover carbon dioxide while preventing a decrease in the capacity of the air conditioning system. That is, in a case in which the amount of adsorbent accommodated in the first container 20 is large, the air volume passing through the outdoor unit 10 decreases due to the pressure loss caused by the adsorbent, potentially reducing the air conditioning capacity of the air conditioning system. In the present embodiment, a plurality of first containers 20 are provided, and the amount of adsorbent accommodated in one first container 20 is set to be within a range that does not cause a decrease in air volume.

In addition, since the adsorption time of carbon dioxide in one first container 20 is shortened, the number of first containers 20 is set to be larger than the number of separation devices 31, and the adsorption time of carbon dioxide in the plurality of first containers 20 and the separation time of carbon dioxide by the separation devices 31 are set to be substantially equal. As a result, the adsorption and separation of carbon dioxide can be performed with a good balance while suppressing a decrease in the capacity of the air conditioning system, thereby improving the efficiency of recovering carbon dioxide.

In addition, the recovery device 32 includes a methanation system that generates methane using the carbon dioxide separated by the separation device 31. When the number of methanation systems is denoted by N1, the number of separation devices 31 is denoted by N2, and the number of the plurality of the outdoor units 10 is denoted by N3, the relationship N1 ≤ N2 < N3 is satisfied.

When methane is generated in the methanation system, a large amount of carbon dioxide is required. By satisfying the relationship N1 ≤ N2 < N3, the generation of methane in the methanation system can be carried out efficiently.

In addition, when the number of the plurality of outdoor units 10 is increased, the air flow rate generated by the plurality of outdoor units 10 (that is, the air flow rate that comes into contact with the adsorbent accommodated in the first container 20) also increases. Therefore, the amount of carbon dioxide adsorbed by the adsorbent increases, and the efficiency of recovering carbon dioxide improves.

In addition, among four side surfaces of the casing 11, the plurality of outdoor units 10 are disposed such that the side surfaces with the smallest area in which the heat exchanger 12 is disposed face each other.

As a result, it is possible to suppress the interference of the air flows generated by the plurality of outdoor units 10 with each other. Therefore, it is possible to recover carbon dioxide while suppressing a decrease in the capacity of the air conditioning system.

In addition, the carbon dioxide recovery system 1 further includes a first adsorbent pipe 22 that connects the plurality of first containers 20 and the separation device 31. The plurality of outdoor units 10 are arranged in the plurality of rows, and at least a part of the first adsorbent pipe 22 is arranged between the plurality of rows.

As a result, the number of pipes, the pipe length, and the other used for the first adsorbent pipe 22 can be reduced, thereby lowering the cost.

In addition, the carbon dioxide recovery system 1 further includes a renewable energy device 40 that is attached to at least one of the separation device 31 and/or the recovery device 32. The power generated by the renewable energy device 40 is supplied to at least one of the plurality of outdoor units 10, the separation device 31, and/or the recovery device 32.

By using the power generated by the renewable energy device 40, the cost of purchasing power can be reduced. In addition, by attaching the renewable energy device 40 to the separation device 31 or the recovery device 32, the need for support members or the like for supporting the renewable energy device 40 can be reduced, thereby lowering the cost.

In addition, the plurality of first containers 20 are disposed along the heat exchangers 12 of the plurality of outdoor units 10.

As a result, the air flow generated by the outdoor unit 10 can be efficiently brought into contact with the adsorbent accommodated in the first container 20, allowing for efficient recovery of carbon dioxide.

Additionally, when the plurality of outdoor units 10 are disposed such that the heat exchangers 12 are aligned on one side, the plurality of first containers 20 are also arranged in one direction, thereby facilitating maintenance.

In addition, when the first container 20 is disposed along the heat exchanger 12, the first container 20 is disposed on the upstream side of the heat exchanger 12 in the flow direction of the air flow generated by the outdoor unit 10. When the adsorbent accommodated in the first container 20 adsorbs carbon dioxide, adsorption heat is generated. For example, in winter, the adsorption heat is transferred to the heat exchanger 12 by the air flow generated by the outdoor unit 10, and warms the heat exchanger 12, thereby suppressing the formation of frost on the heat exchanger 12. Therefore, it is possible to suppress a decrease in the capacity of the air conditioning system.

In addition, the carbon dioxide recovery system 1 further includes a first adsorbent pipe 22 that connects the plurality of first containers 20 and the separation device 31. The first adsorbent pipe 22 includes a first pipe 23 that transports the adsorbent from the separation device 31 toward the plurality of first containers 20, and a second pipe 24 that transports the adsorbent from the plurality of first containers 20 toward the separation device 31. The first pipe 23 is disposed above the second pipe 24. The first pipe 23 is inclined to extend downward as the first pipe 23 is separated from the separation device 31. The second pipe 24 is inclined to extend downward as the second pipe 24 approaches the separation device 31.

By utilizing the inclination of the first pipe 23 and the second pipe 24, the adsorbent can be transported between the plurality of first containers 20 and the separation device 31, thereby eliminating the need for the power required to transport the adsorbent or reducing the power required to transport the adsorbent. Therefore, the recovery efficiency of the carbon dioxide in the entire system is improved.

### Embodiment 2

Next, the carbon dioxide recovery system 1A according to Embodiment 2 will be described. Since the basic configuration of the carbon dioxide recovery system 1A according to the present embodiment is the same as that of Embodiment 1, the differences will be mainly described.

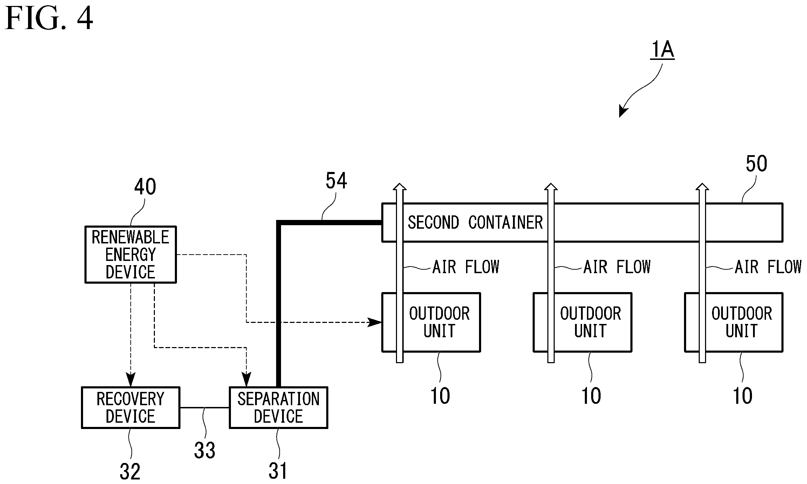

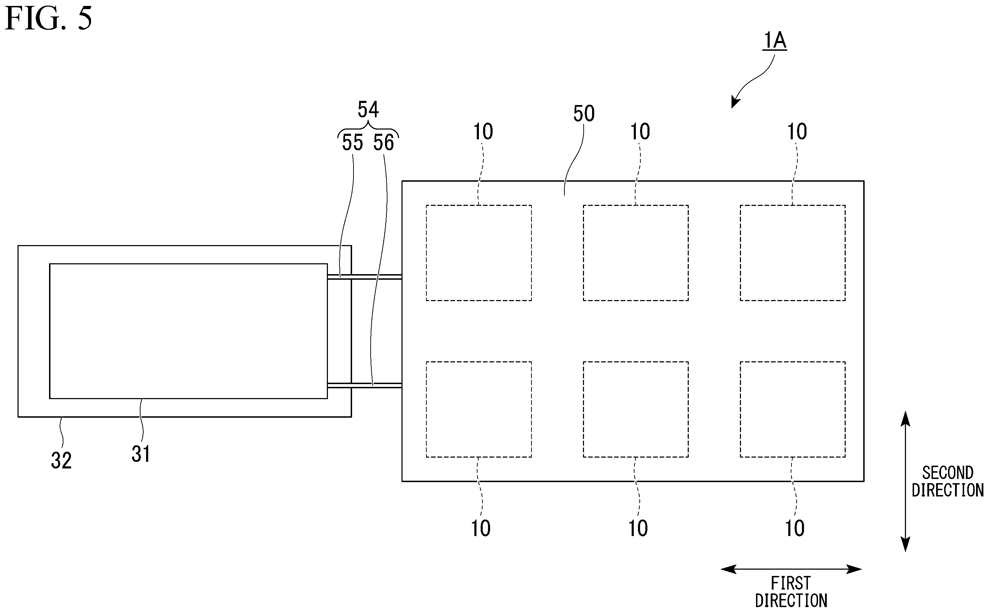

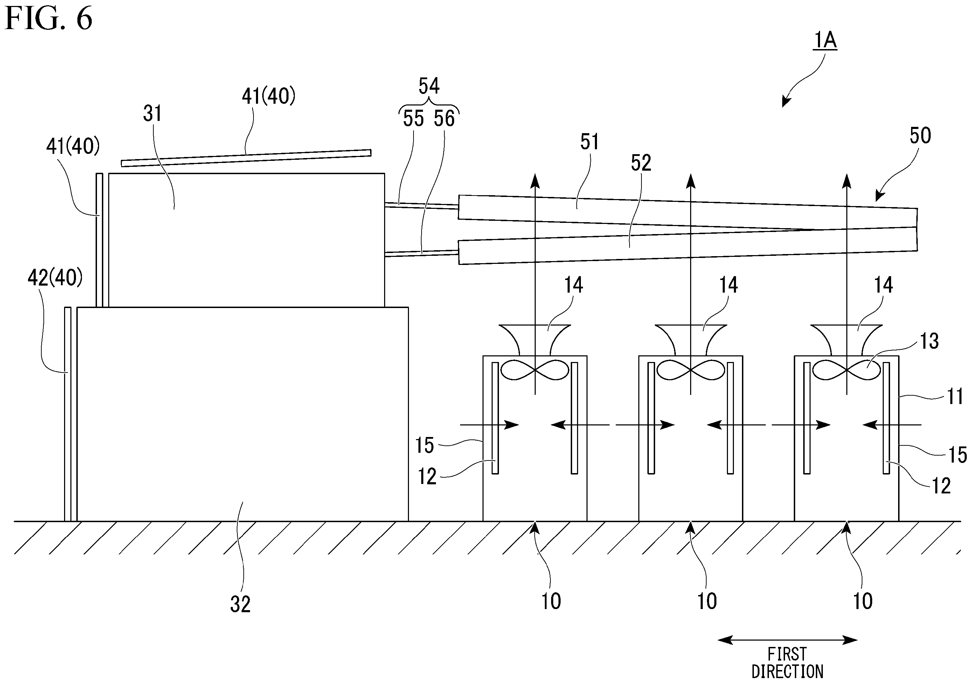

FIG. 4 is a block diagram of a carbon dioxide recovery system 1A according to Embodiment 2. FIG. 5 is a plan view schematically showing the carbon dioxide recovery system 1A. FIG. 6 is a cross-sectional view schematically showing the carbon dioxide recovery system 1A.

The carbon dioxide recovery system 1A includes a plurality of outdoor units 10 of an air conditioning system, an adsorbent, a second container 50 (container), a second adsorbent pipe 54 (adsorbent pipe), a separation device 31, a recovery device 32, and a renewable energy device 40.

The carbon dioxide recovery system 1A according to Embodiment 2 includes a second container 50 and a second adsorbent pipe 54 instead of the plurality of first containers 20 and the first adsorbent pipe 22.

Hereinafter, as shown in FIG. 5, in a plan view, a direction in which the second container 50 and the separation device 31 face each other is referred to as a first direction, and a direction orthogonal to the first direction is referred to as a second direction. In addition, in the first direction, a side of the separation device 31 is referred to as one side, and a side of the second container 50 is referred to as the other side.

The second container 50 is a container capable of accommodating the adsorbent therein. The second container 50 is disposed above the plurality of outdoor units 10. The second container 50 is disposed at a position in which the air flow generated by the plurality of outdoor units 10 reaches. The second container 50 is disposed on a downstream side of the heat exchanger 12 in a flow direction of the air flow generated by the outdoor unit 10.

As shown in FIG. 6, the second container 50 has a V-shape when viewed from the second direction. The second container 50 includes a first accommodating portion 51 and a second accommodating portion 52. The first accommodating portion 51 is disposed above the second accommodating portion 52. In a plan view, the first accommodating portion 51 and the second accommodating portion 52 are disposed to overlap each other. At an end part on the other side in the first direction, the first accommodating portion 51 and the second accommodating portion 52 communicate with each other.

The first accommodating portion 51 and the second accommodating portion 52 are disposed at a position overlapping with the blowing ports 14 of the plurality of outdoor units 10 in a plan view. By the driving of the blower 13, the air flow of the air blown upward from the blowing port 14 reaches the first accommodating portion 51 and the second accommodating portion 52.

The second container 50 (first accommodating portion 51 and second accommodating portion 52) has air permeability. Therefore, when the blower 13 operates, air enters the adsorbent accommodated in the second container 50, or the air inside the adsorbent accommodated in the second container 50 is discharged. That is, the air inside the second container 50 can be replaced with the outside air by the operation of the blower 13.

The second adsorbent pipe 54 connects the second container 50 and the separation device 31. The second adsorbent pipe 54 transports the adsorbent between the second container 50 and the separation device 31. For example, a material of the second adsorbent pipe 54 is polyvinyl chloride, a metal such as aluminum or stainless steel, or the like. The cross-sectional shape of the second adsorbent pipe 54 may be circular or rectangular.

The second adsorbent pipe 54 includes a first pipe 55 that transports the adsorbent from the separation device 31 to the second container 50 (first accommodating portion 51), and a second pipe 56 that transports the adsorbent from the second container 50 to the separation device 31 (second accommodating portion 52).

The first pipe 55 is connected to one end part of the first accommodating portion 51 in the first direction. The adsorbent is transported from the separation device 31 to the first accommodating portion 51 via the first pipe 55. In the first accommodating portion 51, the adsorbent is transported from one side to the other side in the first direction. At an end part on the other side in the first direction, the first accommodating portion 51 and the second accommodating portion 52 communicate with each other.

The adsorbent is transported from the first accommodating portion 51 to the second accommodating portion 52 via the communication portion. In the second accommodating portion 52, the adsorbent is transported from the other side to one side in the first direction. The second pipe 56 is connected to one end part of the second accommodating portion 52 in the first direction. The adsorbent is discharged from one end part of the second accommodating portion 52 in the first direction and is transported to the separation device 31 via the second pipe 56.

The first pipe 55 is disposed above the second pipe 56. Each of the first pipe 55 and the second pipe 56 is inclined to extend downward as it moves toward a downstream side in a transport direction of the adsorbent. That is, the first pipe 55 is inclined to extend downward as the first pipe 55 is separated from the separation device 31, and the second pipe 56 is inclined to extend downward as the second pipe 56 approaches the separation device 31.

The adsorbent moves through the first pipe 55 and the second pipe 56 by its own weight. For example, the adsorbent moves by rolling along the first pipe 55 and the second pipe 56. Depending on the size of the adsorbent or the like, a roller conveyor, belt conveyor, blower, or the like for assisting the movement of the adsorbent may be provided in the first pipe 55 and the second pipe 56.

In the second container 50, the first accommodating portion 51 is inclined to extend downward as the first accommodating portion 51 is separated from the first pipe 55. The second accommodating portion 52 is inclined to extend downward as second accommodating portion 52 approaches the second pipe 56. The adsorbent moves through the first accommodating portion 51 and the second accommodating portion 52 by its own weight.

As shown in FIGS. 5 and 6, in the present embodiment, the separation device 31 is disposed above the recovery device 32.

The method of recovering carbon dioxide using the carbon dioxide recovery system 1A will be described.

The carbon dioxide recovery system 1A recovers carbon dioxide by utilizing the air flow generated by the blower 13 and the external air blown into the second container 50.

That is, when the blower 13 is driven, the air flow of the air blown upward from the blowing port 14 reaches the second container 50. In addition, the external air is blown into the second container 50. The air flow generated by the blower 13 and the external air are brought into contact with the adsorbent accommodated in the second container 50, causing the adsorbent to adsorb carbon dioxide (adsorbing step). Since the separation step and the recovering step are the same as in Embodiment 1, the description thereof will be omitted here.

As described above, the carbon dioxide recovery system 1A according to the present embodiment includes a plurality of outdoor units 10 of an air conditioning system; an adsorbent that is configured to adsorb carbon dioxide; a second container 50 that is disposed above the plurality of outdoor units 10, that is configured to accommodate the adsorbent therein, and that has air permeability; a separation device 31 that is connected to the second container 50 and that is configured to separate carbon dioxide from the adsorbent which has adsorbed the carbon dioxide; and a recovery device 32 that is configured to recover the carbon dioxide separated by the separation device 31. The separation device 31 is disposed above the recovery device 32.

As a result, carbon dioxide can be recovered by utilizing the air flow generated by the plurality of outdoor units 10. Therefore, carbon dioxide can be recovered with energy savings (less energy), improving the efficiency of recovering carbon dioxide.

In addition, the second container 50 is disposed above the plurality of outdoor units 10, and the separation device 31 is disposed above the recovery device 32. As a result, a floor area required for installing the carbon dioxide recovery system 1A can be reduced.

In addition, the adsorption heat generated when the adsorbent accommodated in the second container 50 adsorbs carbon dioxide can be prevented from being transferred to the heat exchanger 12 of the outdoor unit 10. Therefore, for example, when the air conditioning system is in a cooling mode, it is possible to prevent the air conditioning capacity of the air conditioning system from being decreased due to the adsorption heat.

In addition, the carbon dioxide recovery system 1A further includes a second adsorbent pipe 54 that connects the second container 50 and the separation device 31. The second adsorbent pipe 54 includes a first pipe 55 that transports the adsorbent from the separation device 31 toward the second container 50, and a second pipe 56 that transports the adsorbent from the second container 50 toward the separation device 31.

The second container 50 includes a first accommodating portion 51 that is connected to the first pipe 55, and a second accommodating portion 52 that is in communication with the first accommodating portion 51 and is connected to the second pipe 56. The first accommodating portion 51 is inclined to extend downward as first accommodating portion 51 is separated from the first pipe 55, and the second accommodating portion 52 is inclined to extend downward as the second accommodating portion 52 approaches the second pipe 56.

The adsorbent can be transported by utilizing the inclination of the first accommodating portion 51 and the second accommodating portion 52, thereby eliminating the need for the power required to transport the adsorbent or reducing the power required to transport the adsorbent. Therefore, the recovery efficiency of the carbon dioxide in the entire system is improved.

### Embodiment 3

Next, the carbon dioxide recovery system 1B according to Embodiment 3 will be described. Since the basic configuration of the carbon dioxide recovery system 1B according to the present embodiment is the same as those in Embodiments 1 and 2, the differences will be mainly described.

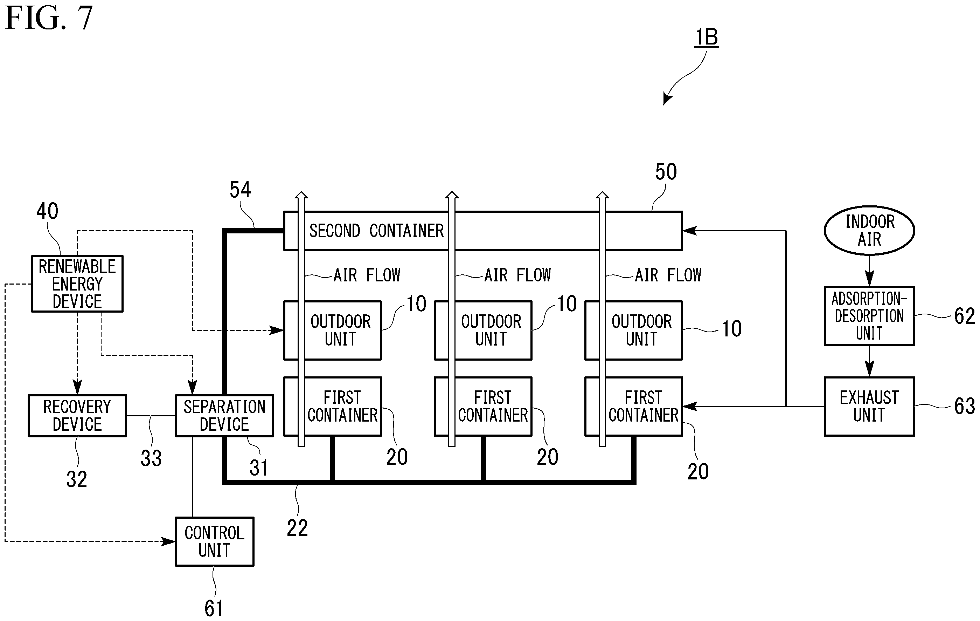

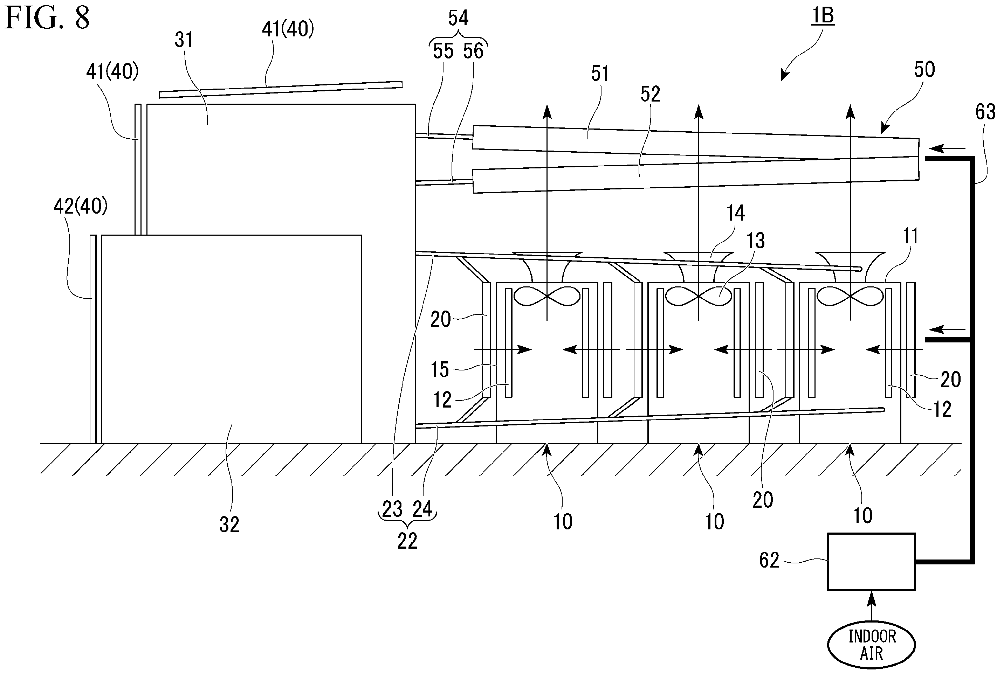

FIG. 7 is a block diagram of a carbon dioxide recovery system 1B according to Embodiment 3. FIG. 8 is a cross-sectional view schematically showing the carbon dioxide recovery system 1B.

The carbon dioxide recovery system 1B includes a plurality of outdoor units 10 of an air conditioning system, an adsorbent, a plurality of first containers 20, a first adsorbent pipe 22, a second container 50, a second adsorbent pipe 54, a separation device 31, a recovery device 32, a renewable energy device 40, a control unit 61, an adsorption-desorption unit 62, and an exhaust unit 63.

The carbon dioxide recovery system 1B according to Embodiment 3 includes both the plurality of first containers 20 and the first adsorbent pipes 22, and the second container 50 and the second adsorbent pipe 54. Since the basic configurations of the plurality of first containers 20, first adsorbent pipes 22, second containers 50, and second adsorbent pipes 54 are the same as those in Embodiments 1 and 2, the description will be omitted here.

In the present embodiment, the separation device 31 is provided with a switching mechanism (not shown) that switches the transport path of the adsorbent between the first adsorbent pipe 22 and the second adsorbent pipe 54.

The control unit 61 controls the switching mechanism such that the first adsorbent pipe 22 transports the adsorbent when the air conditioning system is in heating mode, and the second adsorbent pipe 54 transports the adsorbent when the air conditioning system is in cooling mode. The first adsorbent pipe 22 corresponds to a first transport path that transports the adsorbent via the plurality of first containers 20 and the separation device 31. The second adsorbent pipe 54 corresponds to a second transport path that transports the adsorbent via the second container 50 and the separation device 31.

In a case in which an increase in the amount of carbon dioxide to be recovered is desired, the control unit 61 may control the switching mechanism to transport the adsorbent through both the first adsorbent pipe 22 and the second adsorbent pipe 54.

The adsorption-desorption unit 62 is installed, for example, in the ceiling space of indoors. The adsorption-desorption unit 62 is supplied with indoor air, for example, exhausted from a ventilating fan (not shown) installed on the ceiling. The adsorption-desorption unit 62 adsorbs and desorbs carbon dioxide contained in the indoor air. The adsorption-desorption unit 62 includes, for example, an adsorption unit that adsorbs carbon dioxide from indoor air and a desorption unit that separates the carbon dioxide adsorbed by the adsorption unit. The carbon dioxide concentration of the air after the adsorption-desorption treatment by the adsorption-desorption unit 62 is higher than the carbon dioxide concentration of the untreated air. Note that in the adsorption-desorption unit 62, the adsorption-desorption treatment may be subjected for a plurality of times.

The exhaust unit 63 is, for example, an exhaust duct installed outdoors. The exhaust unit 63 is provided, for example, at a ventilation port that connects the indoors to the outdoors. The exhaust unit 63 is supplied with the air subjected to treatment by the adsorption-desorption unit 62. The exhaust unit 63 exhausts the air subjected to treatment by the adsorption-desorption unit 62 towards the first container 20 and the second container 50.

Note that the control unit 61 may control the destination to which the air exhausted from the exhaust unit 63 is supplied. Specifically, the control unit 61 may control the exhaust unit 63 such that, when the air conditioning system is in heating mode, the exhaust unit 63 exhausts toward the first container 20, and when the air conditioning system is in cooling mode, the exhaust unit 63 exhausts toward the second container 50.

In addition, in the present embodiment, the power generated by the renewable energy device 40 is supplied to at least one of the plurality of outdoor units 10, the separation device 31, the recovery device 32, and/or the control unit 61.

The method of recovering carbon dioxide using the carbon dioxide recovery system 1B will be described.

The carbon dioxide recovery system 1B recovers carbon dioxide by utilizing the air flow generated by the blower 13, the external air blown into the first container 20 and the second container 50, and the air flow of the air discharged from the exhaust unit 63.

That is, when the air conditioning system is in heating mode, the control unit 61 transports the adsorbent through the first adsorbent pipe 22. When the blower 13 is driven, the air flow of the air sucked from the intake port 15 into the casing 11 reaches the first container 20. In addition, the external air is blown into the first container 20. The air flow of the air discharged from the exhaust unit 63 reaches the first container 20. The air flow generated by the blower 13, the external air, and the air flow of the air discharged from the exhaust unit 63 are brought into contact with the adsorbent accommodated in the first container 20, causing the adsorbent to adsorb carbon dioxide (adsorbing step).

In a case where the air conditioning system is in cooling mode, the control unit 61 transports the adsorbent through the second adsorbent pipe 54. When the blower 13 is driven, the air flow of the air blown upward from the blowing port 14 reaches the second container 50. In addition, the external air is blown into the second container 50. The air flow of the air discharged from the exhaust unit 63 reaches the second container 50. The air flow generated by the blower 13, the external air, and the air flow of the air discharged from the exhaust unit 63 are brought into contact with the adsorbent accommodated in the second container 50 causing the adsorbent to adsorb carbon dioxide (adsorbing step).

Since the separation step and the recovering step are the same as in Embodiment 1, the description thereof will be omitted here.

As described above, the carbon dioxide recovery system 1B according to the present embodiment further includes a second container 50 that is disposed above the plurality of outdoor units 10, that is connected to the separation device 31, that is configured to accommodate the adsorbent therein, and that has air permeability, and a control unit 61 that controls the transport path of the adsorbent. The control unit 61 transports the adsorbent through the first adsorbent pipe 22 when the air conditioning system is in heating mode, and transports the adsorbent through the second adsorbent pipe 54 when the air conditioning system is in cooling mode.

In cases where the air conditioning system is in cooling mode or in heating mode, a transport direction of the adsorbent is switched. This allows for efficient recovery of carbon dioxide while suppressing a decrease in the capacity of the air conditioning system.

Specifically, when the air conditioning system is in heating mode, the adsorbent is transported through the first adsorbent pipe 22, and carbon dioxide is adsorbed by the adsorbent accommodated in the first container 20. Here, the air conditioning system is often in heating mode during winter, and there is a possibility that frost may be formed on the heat exchanger 12 of the outdoor unit 10. The adsorption heat generated when the adsorbent accommodated in the first container 20 adsorbs carbon dioxide is transferred to the heat exchanger 12 by the air flow generated in the outdoor unit 10. The heat exchanger 12 is warmed by the adsorption heat, thereby suppressing the formation of frost on the heat exchanger 12. Therefore, it is possible to suppress a decrease in the capacity of the air conditioning system.

When the air conditioning system is in cooling mode, the adsorbent is transported through the second adsorbent pipe 54, and carbon dioxide is adsorbed by the adsorbent accommodated in the second container 50. As a result, the adsorption heat generated when the adsorbent adsorbs carbon dioxide can be prevented from being transferred to the heat exchanger 12 of the outdoor unit 10. Therefore, it is possible to prevent a decrease in the capacity of the air conditioning system due to the adsorption heat.

In addition, the carbon dioxide recovery system 1B further includes an exhaust unit 63 that exhausts the air discharged from indoors toward at least one of the plurality of first containers 20 and/or the second container 50.

As a result, since carbon dioxide can be recovered even from the air with a high carbon dioxide concentration exhausted from the indoors, the recovery efficiency of the carbon dioxide is further improved.

In addition, the adsorption efficiency of carbon dioxide by the adsorbent is influenced by the temperature of the air in contact with the adsorbent. In general, the temperature of the air exhausted from the exhaust unit 63 (indoors) is approximately 25 °C. When the air conditioning system is in cooling mode, the temperature of the air in contact with the adsorbent can be lowered by the air exhausted from the exhaust unit 63. Conversely, when the air conditioning system is in heating mode, the temperature of the air in contact with the adsorbent can be raised by the air exhausted from indoors. Since the temperature of the air in contact with the adsorbent can be adjusted to the temperature suitable for the adsorption of carbon dioxide by the adsorbent using the air exhausted from the exhaust unit 63, the efficiency of recovering carbon dioxide is further improved.

In addition, the carbon dioxide recovery system 1B further includes an adsorption-desorption unit 62 that adsorbs and desorbs carbon dioxide contained in the indoor air. The exhaust unit 63 is supplied with the air subjected to treatment by the adsorption-desorption unit 62.

The carbon dioxide concentration of the air subjected to treatment by the adsorption-desorption unit 62 is higher than the carbon dioxide concentration of the untreated air. Since carbon dioxide can be recovered from the air with a higher carbon dioxide concentration, which is subjected to treatment by the adsorption-desorption unit 62, the recovery efficiency of the carbon dioxide is further improved. In addition, by providing the adsorption-desorption unit 62, the amount of air transported from indoors to outdoors can be reduced, thereby decreasing the energy required for transporting air and lowering costs.

### Embodiment 4

Next, the carbon dioxide recovery system 1C according to Embodiment 4 will be described. Since the basic configuration of the carbon dioxide recovery system 1C according to the present embodiment is the same as that of Embodiment 1, the differences will be mainly described.

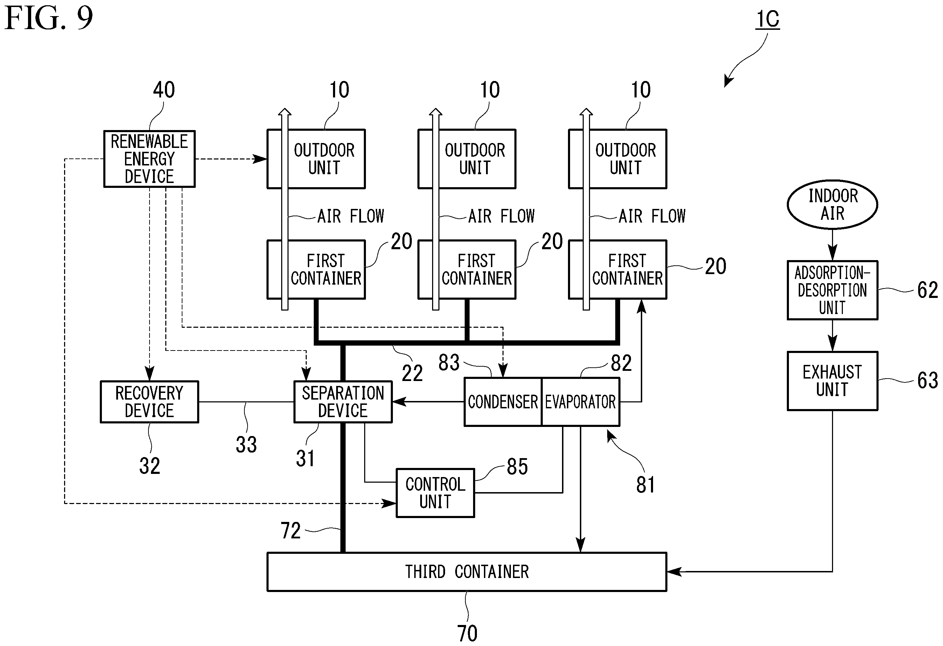

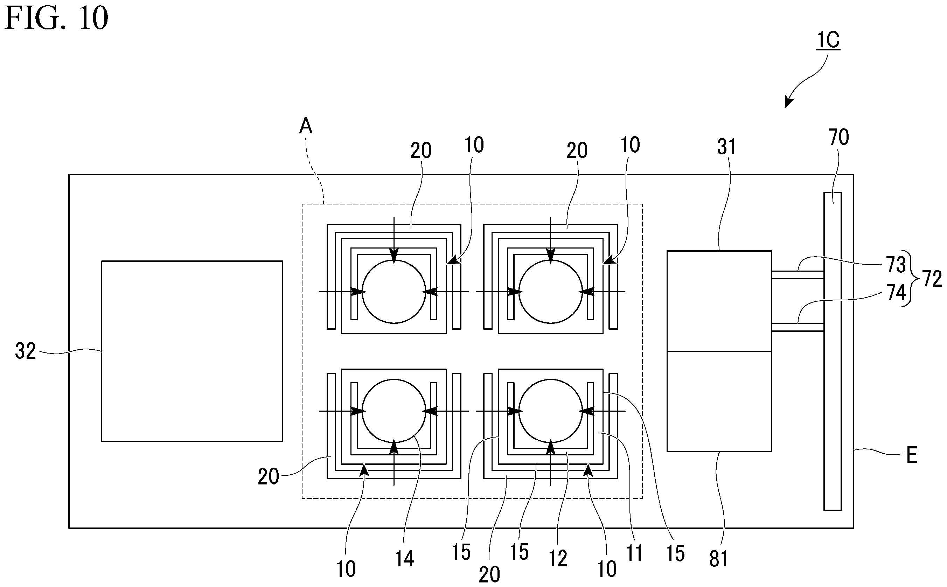

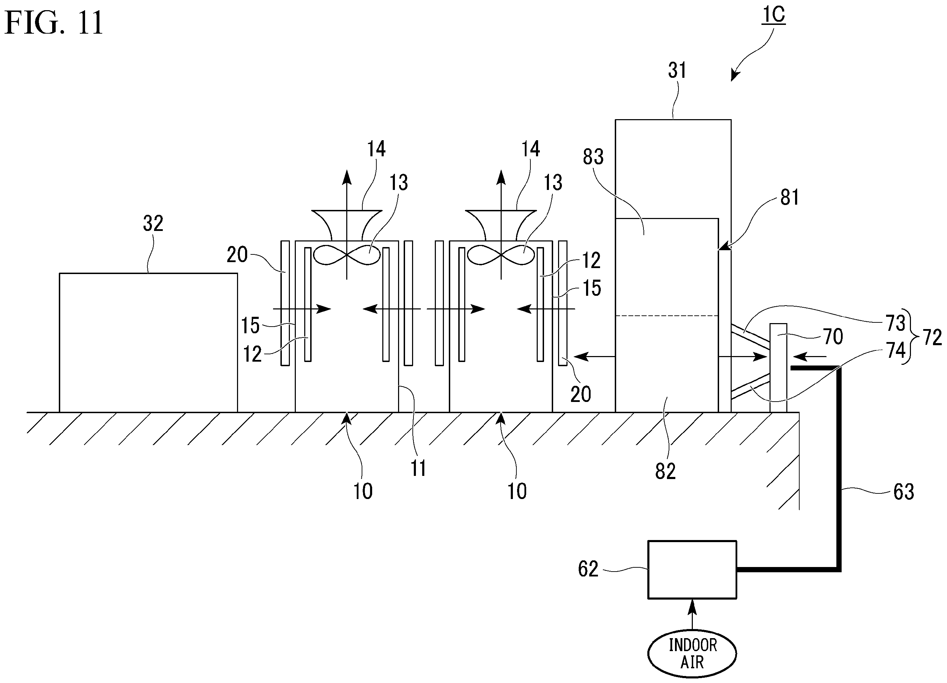

FIG. 9 is a block diagram of a carbon dioxide recovery system 1C according to Embodiment 4. FIG. 10 is a plan view schematically showing the carbon dioxide recovery system 1C. FIG. 11 is a cross-sectional view schematically showing the carbon dioxide recovery system 1C.

The carbon dioxide recovery system 1C includes a plurality of outdoor units 10 of an air conditioning system, an adsorbent, a plurality of first containers 20, a first adsorbent pipe 22, a third container 70, a third adsorbent pipe 72, a separation device 31, a recovery device 32, a renewable energy device 40, an adsorption-desorption unit 62, an exhaust unit 63, heat pump 81, and a control unit 85.

Although the first adsorbent pipe 22 is not shown in FIGS. 10 and 11, the first adsorbent pipe 22 has the same configuration as in Embodiment 1.

The third container 70 is a container capable of accommodating the adsorbent therein. The third container 70 has air permeability. As shown in FIG. 10, the third container 70 is disposed outside a region A in which the plurality of outdoor units 10 are disposed in a plan view. The third container 70 is disposed at a position in which the air flow generated by the outdoor unit 10 does not reach, but external air reaches. For example, the third container 70 is disposed on an edge E of the roof.

As shown in FIG. 11, in the present embodiment, the exhaust unit 63 exhausts the air subjected to treatment by the adsorption-desorption unit 62 toward the third container 70. That is, the air flow of the air exhausted from the exhaust unit 63 reaches the third container 70.

The third adsorbent pipe 72 connects the third container 70 and the separation device 31. The third adsorbent pipe 72 transports the adsorbent between the third container 70 and the separation device 31. For example, a material of the third adsorbent pipe 72 is polyvinyl chloride, a metal such as aluminum or stainless steel, or the like. The cross-sectional shape of the third adsorbent pipe 72 may be circular or rectangular.

The third adsorbent pipe 72 includes a first pipe 73 that transports the adsorbent from the separation device 31 to the third container 70 and a second pipe 74 that transports the adsorbent from the third container 70 to the separation device 31. In the third container 70, the adsorbent is transported from the upper side to the lower side.

The first pipe 73 is disposed above the second pipe 74. Each of the first pipe 73 and the second pipe 74 is inclined to extend downward as it moves toward a downstream side in a transport direction of the adsorbent. That is, the first pipe 73 is inclined to extend downward as the first pipe 73 is separated from the separation device 31, and the second pipe 74 is inclined to extend downward as the second pipe 74 approaches the separation device 31.

The adsorbent moves through the first pipe 73 and the second pipe 74 by its own weight. For example, the adsorbent moves by rolling along the first pipe 73 and the second pipe 74. Depending on the size of the adsorbent or the like, a roller conveyor, belt conveyor, blower, or the like for assisting the movement of the adsorbent may be provided in the first pipe 73 and the second pipe 74.

In the present embodiment, the separation device 31 is disposed between the plurality of first containers 20 and the third container 70.

The heat pump 81 is disposed between the plurality of first containers 20 and the third container 70.

The heat pump 81 includes an evaporator 82 and a condenser 83. In the heat pump 81, the refrigerant circulates between the condenser 83 and the evaporator 82.

In the evaporator 82, heat exchange is performed between the liquid refrigerant flowing through the inside of the evaporator 82 and the air (outside air), and vaporization heat of the refrigerant is absorbed from the air. As a result, the refrigerant that has flowed into the evaporator 82 evaporates to become a low-pressure gaseous refrigerant. Additionally, the air is cooled by the heat absorption action of the refrigerant. The cooled air is exhausted toward the first container 20 or the third container 70.

In the condenser 83, heat exchange is performed between the gaseous refrigerant flowing through the inside of the condenser 83 and the air (outside air), and condensation heat of the refrigerant is released to the air. As a result, the refrigerant that has flowed into the condenser 83 condenses to become a high-pressure liquid refrigerant. In addition, the air is heated by the heat released from the refrigerant. The heated air is supplied to the separation device 31.

In the present embodiment, the separation device 31 is provided with a switching mechanism (not shown) that switches the transport path of the adsorbent between the first adsorbent pipe 22 and the third adsorbent pipe 72.

The control unit 85 controls the switching mechanism such that the first adsorbent pipe 22 transports the adsorbent when the air conditioning system is in heating mode, and the third adsorbent pipe 72 transports the adsorbent when the air conditioning system is in cooling mode.

In a case where an increase in the amount of carbon dioxide to be recovered is desired, the control unit 85 may control the switching mechanism to transport the adsorbent through both the first adsorbent pipe 22 and the third adsorbent pipe 72.

Additionally, the control unit 85 controls the evaporator 82 such that, when the air conditioning system is in heating mode, the air from the evaporator 82 is exhausted toward the first container 20, and when the air conditioning system is in cooling mode, the air from the evaporator 82 is exhausted toward the third container 70.

In addition, in the present embodiment, the power generated by the renewable energy device 40 is supplied to at least one of the plurality of outdoor units 10, the separation device 31, the recovery device 32, the control unit 85, and/or the heat pump 81.

The method of recovering carbon dioxide using the carbon dioxide recovery system 1C will be described.

The carbon dioxide recovery system 1C recovers carbon dioxide by utilizing the air flow generated by the blower 13, the external air, the air flow of the air discharged from the exhaust unit 63, and the air flow of the air discharged from the evaporator 82.

That is, when the air conditioning system is in heating mode, the control unit 85 transports the adsorbent through the first adsorbent pipe 22. The control unit 85 exhausts the air from the evaporator 82 towards the first container 20. When the blower 13 is driven, the air flow of the air sucked from the intake port 15 into the casing 11 reaches the first container 20. In addition, the external air is blown into the first container 20. The air flow of the air discharged from the evaporator 82 reaches the first container 20. The air flow generated by the blower 13, the external air, and the air flow of the air discharged from the evaporator 82 are brought into contact with the adsorbent accommodated in the first container 20 causing the adsorbent to adsorb carbon dioxide (adsorbing step).

In a case where the air conditioning system is in cooling mode, the control unit 85 transports the adsorbent through the third adsorbent pipe 72. The control unit 85 exhausts the air from the evaporator 82 towards the third container 70. The external air is blown into the third container 70. In addition, the air flow of the air discharged from the exhaust unit 63 reaches the third container 70. The air flow of the air discharged from the evaporator 82 reaches the third container 70. The external air, the air flow of the air discharged from the exhaust unit 63, and the air flow of the air discharged from the evaporator 82 are brought into contact with the adsorbent accommodated in the third container 70, causing the adsorbent to adsorb carbon dioxide (adsorbing step).

After that, the adsorbent which has adsorbed the carbon dioxide is transported from the first container 20 to the separation device 31. The separation device 31 separates carbon dioxide from the adsorbent which has adsorbed carbon dioxide (separation step). At this time, the air heated by the condenser 83 is supplied to the separation device 31. Therefore, the heat from the air heated by the condenser 83 can be used for the separation of carbon dioxide. The recovery device 32 recovers the carbon dioxide separated by the separation device 31 (recovering step).

As described above, the carbon dioxide recovery system 1C according to the present embodiment further includes a third container 70 that is disposed outside a region A in which a plurality of outdoor units 10 are disposed in a plan view, that is connected to the separation device 31, that is configured to accommodate the adsorbent therein, and that has air permeability, and an exhaust unit 63 that exhausts the air discharged from the indoors toward the third container 70.

Since the adsorbent accommodated in the third container 70 can also recover carbon dioxide from the air with a high carbon dioxide concentration that is exhausted from indoors, the efficiency of recovering carbon dioxide is further improved.

In addition, for example, when the third container 70 is disposed on the edge E of the roof, the air discharged from indoors can be easily exhausted toward the third container 70 using the exhaust unit 63.

In addition, the carbon dioxide recovery system 1C further includes a heat pump 81, which includes a condenser 83 and an evaporator 82. The separation device 31 and the heat pump 81 are disposed between the plurality of first containers 20 and the third container 70. The air exhausted from the condenser 83 is supplied to the separation device 31. The air from the evaporator 82 is exhausted toward at least one of the plurality of first containers 20 and/or the third container 70.

The air heated by the condenser 83 is supplied to the separation device 31. For example, when the separation device 31 separates the carbon dioxide by heating the adsorbent with a heater, the heat from the air heated by the condenser 83 can be used for the separation of carbon dioxide. Therefore, it is possible to reduce the heating energy required by the heater, thereby achieving energy savings.

In addition, the air from the evaporator 82 is exhausted toward at least one of the plurality of first containers 20 and/or the third container 70. As a result, the amount of air flow in contact with the adsorbent increases, leading to an increase in the amount of carbon dioxide adsorbed by the adsorbent, thereby improving the efficiency of recovering carbon dioxide. Additionally, in a case where the temperature of the adsorbent is high, the adsorption efficiency of carbon dioxide by the adsorbent may be deteriorated. By cooling the adsorbent with the air cooled by the evaporator 82, it is possible to prevent a deterioration in the adsorption efficiency of carbon dioxide and efficiently recover carbon dioxide.

In addition, the carbon dioxide recovery system 1C further includes a control unit 85 that controls a destination to which the air from the evaporator 82 is supplied. The control unit 85 exhausts the air from the evaporator 82 to at least one of the plurality of first containers 20 when the air conditioning system is in cooling mode, and exhausts the air from the evaporator 82 to the third container 70 when the air conditioning system is in heating mode.

In cases where the air conditioning system is in cooling mode and in heating mode, the destination to which the air from the evaporator 82 is supplied is switched, it is possible to efficiently recover carbon dioxide.

### Embodiment 5

Next, the carbon dioxide recovery system 1D according to Embodiment 5 will be described. Since the basic configuration of the carbon dioxide recovery system 1D according to the present embodiment is the same as that of Embodiment 1, the differences will be mainly described.

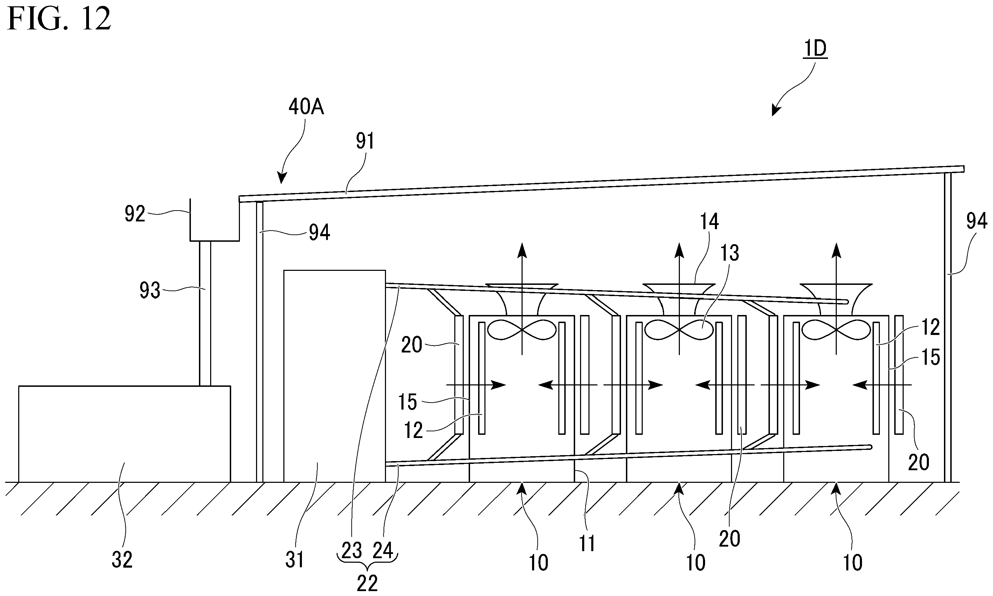

FIG. 12 is a cross-sectional view schematically showing a carbon dioxide recovery system 1D according to Embodiment 5.

The carbon dioxide recovery system 1D includes a plurality of outdoor units 10 of an air conditioning system, an adsorbent, a plurality of first containers 20, a first adsorbent pipe 22, a separation device 31, a recovery device 32, and a renewable energy device 40A.

The renewable energy device 40A includes a solar panel 91, a collection unit 92, and a supply pipe 93. The power generated by the renewable energy device 40A is supplied to at least one of the plurality of outdoor units 10, the separation device 31, and the recovery device 32.

The solar panel 91 is disposed to cover the plurality of outdoor units 10 and the plurality of first containers 20 from above. The solar panel 91 is supported by column 94. The collection unit 92 is attached to an edge part of the solar panel 91. The solar panel 91 is inclined downward toward the collection unit 92. The supply pipe 93 connects the collection unit 92 and the recovery device 32.

Since the solar panel 91 is inclined downward toward the collection unit 92, when it rains, rainwater flows over an upper surface of the solar panel 91 and is collected in the collection unit 92. The water collected in the collection unit 92 is supplied to the methanation system of the recovery device 32 via the supply pipe 93. Note that the water collected by the collection unit 92 may be supplied to the methanation system after dust and the like are removed by a filter. The methanation system generates methane using carbon dioxide supplied from the separation device 31 and water supplied from the collection unit 92.

As described above, the carbon dioxide recovery system 1D according to the present embodiment further includes a solar panel 91 that is disposed to cover the plurality of first containers 20 from above.

When the adsorbent contains moisture, the adsorption efficiency of carbon dioxide by the adsorbent deteriorates. The rainwater falling on the first container 20 can be blocked by the solar panel 91, thereby suppressing the wetting of the adsorbent accommodated in the first container 20. Therefore, it is possible to suppress the deterioration in the adsorption efficiency of carbon dioxide due to rain and to suppress a deterioration in the efficiency of recovering carbon dioxide.

In addition, since the sunlight can be blocked by the solar panel 91, particularly in summer, the temperature rise of the adsorbent accommodated in the first container 20 can be suppressed, thereby suppressing a deterioration in the adsorption efficiency of carbon dioxide by the adsorbent.

In addition, the recovery device 32 includes a methanation system that generates methane using the carbon dioxide separated by the separation device 31, and a supply pipe 93 that supplies the water collected by the solar panel 91 to the methanation system is provided.

Since the water (rainwater) collected by the solar panel 91 can be utilized in the methanation system, it is possible to reduce costs.

### Embodiment 6

Next, the carbon dioxide recovery system 1E according to Embodiment 6 will be described. Since the basic configuration of the carbon dioxide recovery system 1E according to the present embodiment is the same as that of Embodiment 3, the differences will be mainly described.

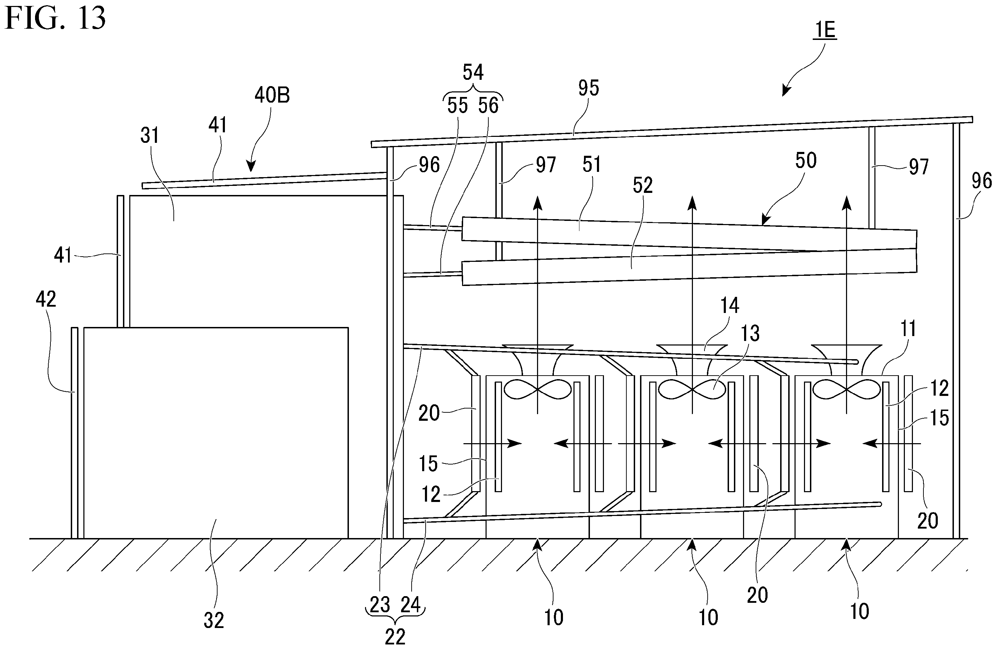

FIG. 13 is a cross-sectional view schematically showing a carbon dioxide recovery system 1E according to Embodiment 6.

The carbon dioxide recovery system 1E includes a plurality of outdoor units 10 of an air conditioning system, an adsorbent, a plurality of first containers 20, a first adsorbent pipe 22, a second container 50, a second adsorbent pipe 54, a separation device 31, a recovery device 32, and a renewable energy device 40B.

The renewable energy device 40B includes solar panels 41 and 42, each attached to the wall surface of the separation device 31 and the recovery device 32, and a solar panel 95. The power generated by the renewable energy device 40B is supplied to at least one of the plurality of outdoor units 10, the separation device 31, and the recovery device 32.

The solar panel 95 is disposed to cover the plurality of outdoor units 10, the plurality of first containers 20, and the second container 50 from above. The solar panel 95 is supported by column 96.

The second container 50 is suspended and supported by the solar panel 95 using the fixing jig 97.

As described above, the carbon dioxide recovery system 1E according to the present embodiment further includes a solar panel 95 that is disposed to cover the second container 50 from above. The second container 50 is fixed to the solar panel 95.

As a result, it is possible to reduce the number of fixing jigs required for fixing the second container 50 or to shorten a length of the fixing jigs, compared to a case where the second container 50 is supported from below (that is, from the floor surface of the roof of the building), thereby lowering the cost.

### Embodiment 7

Next, the carbon dioxide recovery system 1F according to Embodiment 7 will be described. Since the basic configuration of the carbon dioxide recovery system 1F according to the present embodiment is the same as that of Embodiment 1, the differences will be mainly described.

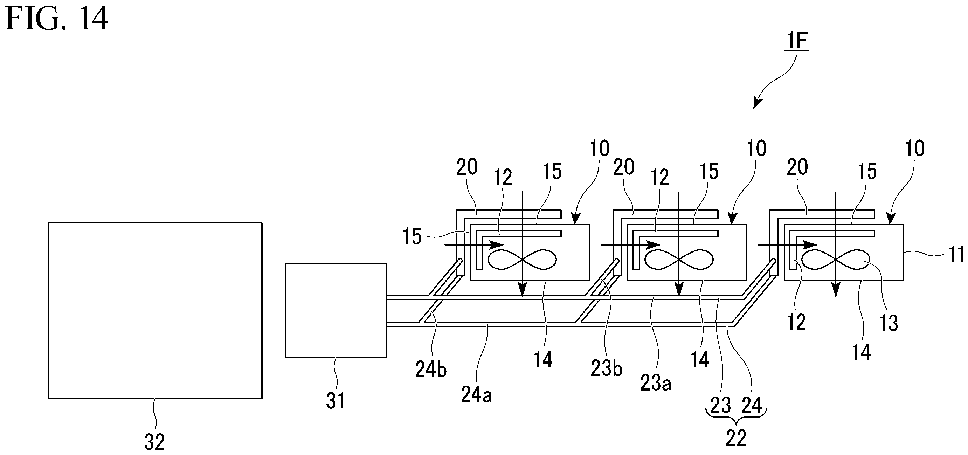

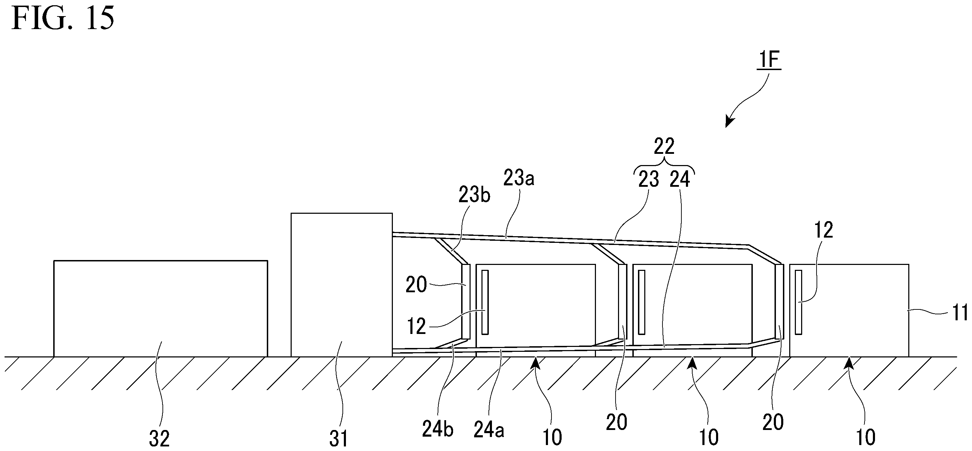

FIG. 14 is a plan view schematically showing the carbon dioxide recovery system 1F according to Embodiment 7. FIG. 15 is a side view schematically showing the carbon dioxide recovery system 1F.

The carbon dioxide recovery system 1F includes a plurality of outdoor units 10 of an air conditioning system, an adsorbent, a plurality of first containers 20, a first adsorbent pipe 22, a separation device 31, and a recovery device 32.

In the carbon dioxide recovery system 1F according to the present embodiment, the structures of the outdoor unit 10 and the first container 20 differ from those in the Embodiment 1.

The outdoor unit 10 includes a casing 11, a heat exchanger 12, and a blower 13.

The casing 11 has a rectangular parallelepiped shape with four side surfaces, a top surface, and a bottom surface. Among the four side surfaces of the casing 11, one side surface (first side surface) is formed with a blowing port 14. Among the four side surfaces of the casing 11, the intake ports 15 are formed on the other two side surfaces. The side surface on which the intake port 15 is formed includes the side surface (second side surface) facing the side surface on which the blowing port 14 is formed (first side surface).

In a plan view, the heat exchanger 12 has a substantially L shape. The heat exchanger 12 is disposed along the two side surfaces of the casing 11 in which the intake ports 15 are formed.

When the blower 13 is driven, air is sucked into the casing 11 from the intake port 15. The air sucked into the casing 11 passes through the heat exchanger 12 and is blown out from the blowing port 14 to the outside of the casing 11. As shown in FIG. 14, at least part of the air flow generated by the blower 13 flows in one direction along a horizontal direction from the intake port 15 (first side surface) toward the blowing port 14 (second side surface).

The plurality of outdoor units 10 are arranged in a single row. The plurality of outdoor units 10 are disposed such that each of directions from the intake ports 15 toward the blowing ports 14 (the aforementioned one direction) substantially coincide.

The separation device 31 and the recovery device 32 are disposed at a position in which the air flow generated by the blower 13 does not reach.

In a plan view, the first container 20 has a substantially L shape. The first container 20 is disposed along the heat exchanger 12. In other words, the first container 20 is disposed along two side surfaces of the casing 11 in which the heat exchanger 12 is disposed (that is, the two side surfaces in which the intake port 15 is formed).

As described above, in the carbon dioxide recovery system 1F according to the present embodiment, each of the plurality of outdoor units 10 includes a casing 11 having four side surfaces including a first side surface on which the intake port 15 is formed and a second side surface on which the blowing port 14 is formed. The plurality of outdoor units 10 are disposed such that each of the directions from the intake ports 15 toward the blowing ports 14 substantially coincide. The separation device 31 and the recovery device 32 are disposed at a position in which the air flow generated by the plurality of outdoor units 10 does not reach.

As a result, it is possible to suppress a decrease in air volume passing through the outdoor unit 10 and to prevent a decrease in the air conditioning capacity of the air conditioning system.

In addition, the plurality of first containers 20 are disposed along the heat exchangers 12 of the plurality of outdoor units 10.

As a result, the air flow generated by the outdoor unit 10 can be efficiently brought into contact with the adsorbent accommodated in the first container 20, allowing for efficient recovery of carbon dioxide.

### Modification Example of Embodiment 7

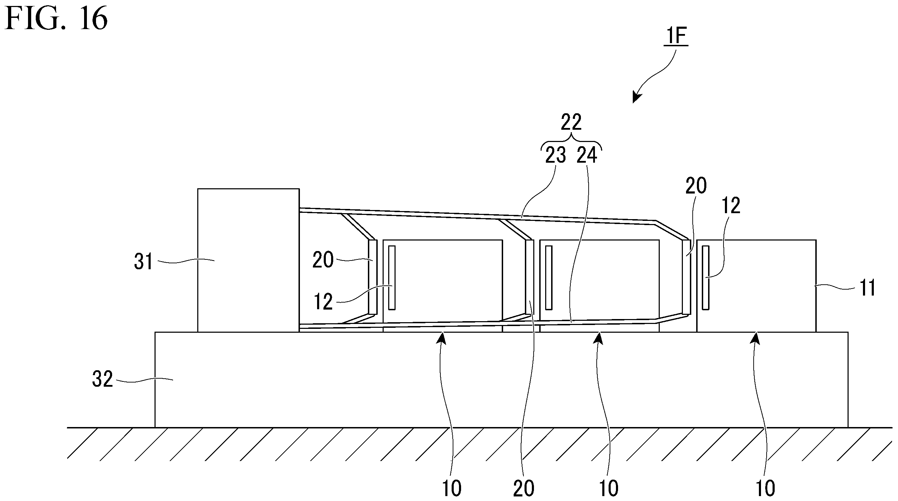

FIG. 16 is a side view schematically showing a carbon dioxide recovery system 1F according to a modification example of Embodiment 7.

As shown in FIG. 16, in the present modification example, the plurality of outdoor units 10 and the separation device 31 are disposed above the recovery device 32.

As a result, the floor area required for installing the carbon dioxide recovery system 1F can be reduced.

However, the technical scope of the present invention is not limited to the above embodiments, and various modifications can be made without departing from the gist of the present invention.

For example, in Embodiments 1 to 7, the renewable energy device 40 may generate electricity using renewable energy other than solar light, such as wind power, geothermal heat, hydraulic power, and biomass.

In Embodiments 2, 3 and 6, the second container 50 may have another accommodating portion between the first accommodating portion 51 and the second accommodating portion 52. In this case, for example, the second container 50 may have a W shape when viewed from a second direction.

In Embodiments 3 and 4, the adsorption-desorption unit 62 may be omitted. In this case, the air exhausted from the ventilating fan is directly supplied to the exhaust unit 63.

In addition, the above-described embodiments or modification examples may be appropriately combined.

For example, in Embodiment 2, the renewable energy device 40B of Embodiment 6 may be used.

In Embodiment 3, the third container 70 and the third adsorbent pipe 72 of Embodiment 4 may be provided.

In Embodiment 3, the renewable energy device 40A of Embodiment 5 may be used. In this case, the power generated by the renewable energy device 40A may be supplied to at least one of the plurality of outdoor units 10, the separation device 31, the recovery device 32, and/or the control unit 61.

In Embodiment 3, the renewable energy device 40B of Embodiment 6 may be used. In this case, the power generated by the renewable energy device 40B may be supplied to at least one of the plurality of outdoor units 10, the separation device 31, the recovery device 32, and/or the control unit 61.

In Embodiment 4, the renewable energy device 40A of Embodiment 5 may be used. In this case, the power generated by the renewable energy device 40A may be supplied to at least one of the plurality of outdoor units 10, the separation device 31, the recovery device 32, the control unit 85, and/or the heat pump 81.

In Embodiments 4 and 5, the outdoor unit 10 of Embodiment 7 may be used.

In Embodiment 5, the renewable energy device 40A may further include the solar panels 41 and 42 of Embodiment 1.

In Embodiment 7, the renewable energy device 40 of Embodiment 1 or the renewable energy device 40A of Embodiment 5 may be provided.

In Embodiment 7, similar to Embodiment 3, the second container 50 may also be provided. In this case, the second container 50 is disposed on a downstream side of the heat exchanger 12 in the flow direction of the air flow generated by the outdoor unit 10. The second container 50 may be disposed along the side surface of the casing 11 in which the blowing port 14 is formed. In addition, when the air conditioning system is in heating mode, the adsorbent may be transported to the first container 20, and when the air conditioning system is in cooling mode, the adsorbent may be transported to the second container 50.

Furthermore, the above-described control units 61 and 85 include a computer system therein. A program for realizing the functions of each configuration of the above-described carbon dioxide recovery systems 1, 1A, 1B, 1C, 1D, 1E, and 1F may be recorded on a computer-readable recording medium, the program recorded on the recording medium may be read into a computer system, and the program may be executed to perform processing in the above-described control units 61 and 85. In addition, hardware other than the control units 61 and 85 may perform the above-described processing.

Here, the "the program recorded on the recording medium may be read into a computer system, and the program may be executed" includes installing the program in the computer system. Here, it is assumed that the term "computer system" described here includes an OS and hardware such as a peripheral device.

In addition, the "computer system" may include a plurality of computer devices connected via a network including a communication line such as the Internet or a WAN, a LAN, and a dedicated line. In addition, the "computer-readable recording medium" refers to a portable medium such as a flexible disk, a magneto-optical disk, a ROM, and a CD-ROM, and a storage device such as a hard disk built in the computer system. As described above, the recording medium in which the program is stored may be a non-transitory recording medium such as a CD-ROM.

In addition, the recording medium also includes a recording medium provided internally or externally which is accessible from a distribution server for distributing the program. It should be noted that the program may be divided into a plurality of programs and may be downloaded at different timings and then combined by each configuration provided in the carbon dioxide recovery system 1, or a distribution server that distributes each divided program may be different.

Further, the "computer-readable recording medium" also includes a recording medium that holds the program for a certain period of time such as a volatile memory (RAM) inside the computer system such as a server or a client in a case in which a program is transmitted via a network. In addition, the program may be a program for realizing some of the functions described above. Further, the program may be a so-called difference file (difference program) capable of realizing the functions described above in combination with a program recorded in advance in the computer system.

### List of Reference Signs

1, 1A, 1B, 1C, 1D, 1E, 1F: Carbon dioxide recovery system
10: Outdoor unit
11: Casing
12: Heat exchanger
13: Blower
14: Blowing port
15: Intake port
20: First container
22: First adsorbent pipe
23: First pipe
24: Second pipe
31: Separation device
32: Recovery device
40, 40A, 40B: Renewable energy device
41, 42, 91, 95: Solar panel
50: Second container (container)
51: First accommodating portion
52: Second accommodating portion
54: Second adsorbent pipe (adsorbent pipe)
61, 85: Control unit
62: Adsorption-desorption unit
63: Exhaust unit
70: Third container
72: Third adsorbent pipe
81: Heat pump
82: Evaporator
83: Condenser

## Claims

1. A carbon dioxide recovery system comprising:
a plurality of outdoor units of an air conditioning system;
an adsorbent that is configured to adsorb carbon dioxide;
a plurality of first containers that are disposed at positions in which at least part of an air flow generated by the plurality of outdoor units reaches, that are configured to accommodate the adsorbent therein, and that have air permeability;
a separation device that is connected to the plurality of first containers and that is configured to separate carbon dioxide from the adsorbent which has adsorbed the carbon dioxide; and
a recovery device that is configured to recover the carbon dioxide separated by the separation device,
wherein the number of the plurality of first containers is greater than the number of separation devices.

2. The carbon dioxide recovery system according to Claim 1,
wherein the recovery device includes a methanation system that generates methane using the carbon dioxide separated by the separation device, and
when the number of methanation systems is denoted by N1, the number of the separation devices is denoted by N2, and the number of the plurality of outdoor units is denoted by N3, a relationship N1 ≤ N2 < N3 is satisfied.

3. The carbon dioxide recovery system according to Claim 1 or 2,
wherein each of the plurality of outdoor units includes a casing having four side surfaces and a heat exchanger accommodated in the casing, and
the plurality of outdoor units are disposed such that side surfaces, among the four side surfaces of the casing, in which an area occupied by the heat exchanger is smallest, face each other.

4. The carbon dioxide recovery system according to any one of Claims 1 to 3, further comprising:
a first adsorbent pipe that is configured to connect the plurality of first containers and the separation device,
wherein the plurality of outdoor units are arranged in a plurality of rows, and
at least a part of the first adsorbent pipe is disposed between the plurality of rows.

5. The carbon dioxide recovery system according to any one of Claims 1 to 4, further comprising:
a renewable energy device that is attached to at least one of the separation device and/or the recovery device,
wherein power generated by the renewable energy device is supplied to at least one of the plurality of outdoor units, the separation device, and/or the recovery device.

6. The carbon dioxide recovery system according to any one of Claims 1 to 5,
wherein the plurality of first containers are disposed along heat exchangers of the plurality of outdoor units.

7. The carbon dioxide recovery system according to any one of Claims 1 to 6, further comprising:
a first adsorbent pipe that is configured to connect the plurality of first containers and the separation device,
wherein the first adsorbent pipe includes
a first pipe that transports the adsorbent from the separation device toward the plurality of first containers, and
a second pipe that transports the adsorbent from the plurality of first containers toward the separation device,
the first pipe is disposed above the second pipe,
the first pipe is inclined to extend downward as the first pipe is separated from the separation device, and
the second pipe is inclined to extend downward as the second pipe approaches the separation device.

8. The carbon dioxide recovery system according to any one of Claims 1 to 7, further comprising:
a second container that is disposed above the plurality of outdoor units, that is connected to the separation device, that is configured to accommodate the adsorbent therein, and that has air permeability; and
a control unit that is configured to control a transport path of the adsorbent,
wherein the control unit transports the adsorbent through a first transport path that transports the adsorbent via the plurality of first containers and the separation device when the air conditioning system is in heating mode, and transports the adsorbent through a second transport path that transports the adsorbent via the second container and the separation device when the air conditioning system is in cooling mode.

9. The carbon dioxide recovery system according to Claim 8, further comprising:
an exhaust unit that is configured to exhaust air discharged from indoors toward at least one of the plurality of first containers and/or the second container.

10. The carbon dioxide recovery system according to Claim 9, further comprising:
an adsorption-desorption unit that is configured to adsorb and desorb carbon dioxide contained in indoor air,
wherein air subjected to treatment by the adsorption-desorption unit is supplied to the exhaust unit.

11. The carbon dioxide recovery system according to any one of Claims 8 to 10, further comprising:
a renewable energy device that is attached to at least one of the separation device and/or the recovery device,
wherein power generated by the renewable energy device is supplied to at least one of the plurality of outdoor units, the separation device, the recovery device, and/or the control unit.

12. The carbon dioxide recovery system according to any one of Claims 1 to 7, further comprising:
a third container that is disposed outside a region in which the plurality of outdoor units are disposed in a plan view, that is connected to the separation device, that is configured to accommodate the adsorbent therein, and that has air permeability; and
an exhaust unit that is configured to exhaust air discharged from indoors toward the third container.

13. The carbon dioxide recovery system according to Claim 12, further comprising:
a heat pump including a condenser and an evaporator,
wherein the separation device and the heat pump are disposed between the plurality of first containers and the third container,
air exhausted from the condenser is supplied to the separation device, and
air from the evaporator is exhausted toward at least one of the plurality of first containers and/or the third container.

14. The carbon dioxide recovery system according to Claim 13, further comprising:
a control unit that is configured to control a destination to which the air from the evaporator is supplied,
wherein the control unit exhausts the air from the evaporator toward at least one of the plurality of first containers when the air conditioning system is in cooling mode, and exhausts the air from the evaporator toward the third container when the air conditioning system is in heating mode.

15. The carbon dioxide recovery system according to Claim 14, further comprising:
a renewable energy device that is attached to at least one of the separation device and/or the recovery device,
wherein power generated by the renewable energy device is supplied to at least one of the plurality of outdoor units, the separation device, the recovery device, the control unit, and/or the heat pump.

16. The carbon dioxide recovery system according to any one of Claims 1 to 15, further comprising:
a solar panel that is disposed to cover the plurality of first containers from above.

17. The carbon dioxide recovery system according to Claim 16,
wherein the recovery device includes a methanation system that generates methane using the carbon dioxide separated by the separation device, and
a supply pipe that supplies water collected by the solar panel to the methanation system is provided.

18. The carbon dioxide recovery system according to any one of Claims 8 to 10, further comprising:
a solar panel that is disposed to cover the second container from above,
wherein the second container is fixed to the solar panel.

19. The carbon dioxide recovery system according to Claim 1,
wherein each of the plurality of outdoor units includes a casing having four side surfaces, including a first side surface on which an intake port is formed and a second side surface on which a blowing port is formed,
the plurality of outdoor units are disposed such that a direction from the intake port toward the blowing port substantially coincide, and
the separation device and the recovery device are disposed at positions in which the air flow generated by the plurality of outdoor units does not reach.

20. The carbon dioxide recovery system according to Claim 19,
wherein the plurality of first containers are disposed along heat exchangers of the plurality of outdoor units.

21. The carbon dioxide recovery system according to Claim 19 or 20,
wherein the plurality of outdoor units and the separation device are disposed above the recovery device.

22. A carbon dioxide recovery system comprising:
a plurality of outdoor units of an air conditioning system;
an adsorbent that is configured to adsorb carbon dioxide;
a container that is disposed above the plurality of outdoor units, that is configured to accommodate the adsorbent therein, and that has air permeability;
a separation device that is connected to the container and that is configured to separate carbon dioxide from the adsorbent which has adsorbed the carbon dioxide; and
a recovery device that is configured to recover the carbon dioxide separated by the separation device,
wherein the separation device is disposed above the recovery device.

23. The carbon dioxide recovery system according to Claim 22, further comprising:
an adsorbent pipe that is configured to connect the container and the separation device,
wherein the adsorbent pipe includes
a first pipe that transports the adsorbent from the separation device toward the container, and
a second pipe that transports the adsorbent from the container toward the separation device,
the container includes
a first accommodating portion that is connected to the first pipe, and
a second accommodating portion that is in communication with the first accommodating portion and is connected to the second pipe,
the first accommodating portion is inclined to extend downward as the first accommodating portion is separated from the first pipe, and
the second accommodating portion is inclined to extend downward as the second accommodating portion approaches the second pipe.
